# EUROPEAN PATENT SPECIFICATION

(11) **EP 3 427 946 B1**
(45) Date of publication and mention of the grant of the patent: **07.10.2020**
(21) Application number: 17763058.9
(22) Date of filing: 02.03.2017
(51) Int. Cl.: B32B 27/00, B29C 65/02, B32B 27/16, C08J 7/00, B32B 7/10, B32B 25/08, B32B 27/30, B32B 27/36

(54) **METHOD FOR PRODUCING AN ASSEMBLY**
VERFAHREN ZUR HERSTELLUNG EINER ANORDNUNG
MÉTHODE DE PRODUCTION D'UN ASSEMBLAGE

(30) Priority: 09.03.2016 JP 2016045488
(43) Date of publication of application: 16.01.2019
(73) Proprietor: Zeon Corporation, Tokyo 100-8246 (JP)
(72) Inventor: ISHIGURO, Atsushi, Tokyo 100-8246 (JP); CHIBA, Daido, Tokyo 100-8246 (JP); KOHARA, Teiji, Tokyo 100-8246 (JP); KURIHARA, Ryuta, Tokyo 100-8246 (JP)
(74) Representative: Maiwald Patent- und Rechtsanwaltsgesellschaft mbH
(86) International application number: PCT/JP2017/008234
(87) International publication number: WO 2017/154718

(56) References cited:
- EP-A1- 1 623 822
- EP-A1- 2 623 526
- WO-A1-2007/119552
- WO-A1-2013/051717
- WO-A1-2014/050743
- WO-A1-2015/099079
- WO-A1-2015/129653
- WO-A1-2015/137376
- WO-A1-2016/052137
- JP-A- H03 504 985
- JP-A- S63 109 049
- JP-A- 2008 037 019
- JP-A- 2011 079 237
- JP-A- 2012 036 300
- US-A1- 2019 009 506

## Description

### TECHNICAL FIELD

The present invention relates to a method for producing an assembly obtained by bonding a specific hydrogenated block copolymer sheet having an alkoxysilyl group introduced therein with a thermoplastic resin sheet.

### BACKGROUND ART

Conventionally, laminated glasses obtained by inserting intermediate films of resin between a plurality of glasses and adhesively integrating them have been known. Since such laminated glasses are excellent in piercing resistance and thermal impact resistance, they have been widely used as automobile glasses, security glasses.

In addition, Patent Documents 1 to 5 disclose laminated glasses in which thermoplastic resin sheets of polycarbonate, polyethylene terephthalate or the like are laminated between a plurality of glass sheets through intermediate films using polyvinyl butyral (PVB), ethylene vinyl acetate copolymer (EVA), as a method for enhancing piercing resistance and impact resistance of laminated glasses.

On the other hand, Patent Documents 6 to 8 disclose that a specific modified hydrogenated block copolymer having an alkoxysilyl group introduced therein has firm adhesiveness with glass and metal and is excellent in transparency, heat resistance, light fastness and the like, and thus it is useful as a solar cell sealant, an intermediate film for a laminated glass. Also, these documents disclose that a polycarbonate plate is inserted in a laminated glass to increase added values.

However, when it is intended to increase piercing resistance and impact resistance by laminating resin sheets such as a polycarbonate resin sheet and a polyethylene terephthalate resin sheet between glass sheets through an intermediate film made of a specific modified hydrogenated block copolymer, there have been problems that peeling is easily caused on an interface between this intermediate film and the thermoplastic resin sheet in an impact resistance test, because this intermediate film does not necessarily have sufficient adhesiveness for thermoplastic resin sheets

### CITATION LIST

### PATENT LITERATURE

Patent Literature 1: JP-A-2-041240
Patent Literature 2: JP-A-6-000915
Patent Literature 3: JP-A-7-149548 (US 5496643)
Patent Literature 4: JP-A-8-002948
Patent Literature 5: JP-A-11-35349
Patent Literature 6: WO 2012/043708 (US 2013/0244367 A1)
Patent Literature 7: WO 2013/176258 (US 2015/0104654 A1)
Patent Literature 8: WO 2014/077267 (US 2015/0329750 A1) WO2015137376 discloses a composite multi-layer sheet containing modified hydrogenated copolymer.

### SUMMARY OF INVENTION

### TECHNICAL PROBLEM

The present invention has been made in view of the above situation of the conventional art, and an object of the invention is to provide a method for producing an assembly obtained by firmly bonding a sheet made of a specific modified hydrogenated block copolymer having an alkoxysilyl group introduced therein with a thermoplastic resin sheet.

### SOLUTION TO PROBLEM

As a result of intensive studies to solve the above problems, the present inventors have found that when bonding a sheet made of a specific modified hydrogenated block copolymer having an alkoxysilyl group introduced therein with a thermoplastic resin sheet, firm adhesion of the interface between the sheet made of a specific modified hydrogenated block copolymer and the thermoplastic resin sheet can be achieved by previously activating the adherend surface of the thermoplastic resin sheet with at least one selected from plasma exposure, excimer UV exposure and corona discharge, and this finding has led to the completion of the invention.

Thus, aspects of the invention provide a method for producing an assembly by bonding a sheet made of a modified hydrogenated block copolymer having an alkoxysilyl group in an amount of 0.1 to 10 parts by weight introduced therein with a thermoplastic resin sheet, the method including steps of:
(1) activating an adherend surface of the thermoplastic resin sheet with at least one selected from plasma exposure, excimer UV exposure and corona discharge; and
(2) superposing the sheet made of the modified hydrogenated block copolymer having the alkoxysilyl group introduced therein with the adherend surface of the thermoplastic resin sheet to be subjected to thermally press-bonding.

The method for producing the assembly wherein the step (1) is a step of activating both surfaces of the adherend surface of the sheet made of the modified hydrogenated block copolymer and the adherend surface of the thermoplastic resin sheet with at least one selected from plasma exposure, excimer UV exposure and corona discharge.

### ADVANTAGEOUS EFFECTS OF INVENTION

The assembly of the invention is obtained by bonding the sheet made of the modified hydrogenated block copolymer having the alkoxysilyl group introduced therein with the thermoplastic resin sheet, and is excellent in adhesion strength.

In accordance with the production method of the invention, the assembly excellent in adhesion strength according to one embodiment of the invention can be efficiently produced.

The sheet made of the modified hydrogenated block copolymer obtained by activation according to one embodiment of the invention is excellent in adhesiveness with the thermoplastic resin formed article, as well as in adhesiveness with a formed article made of a curable resin composition, or a formed article made of a composite material composed of a curable resin with glass, paper, metal, carbon fiber.

### DESCRIPTION OF EMBODIMENTS

Hereinafter, the present invention will be described in detail.

The assembly according to one embodiment of the invention is an assembly obtained by bonding a sheet made of a modified hydrogenated block copolymer having an alkoxysilyl group introduced therein with a thermoplastic resin sheet, wherein a peel strength is the adherend surface is 4 N/cm or higher.

The assembly according to one embodiment of the invention has sufficient adhesiveness between the sheet made of the modified hydrogenated block copolymer having the alkoxysilyl group introduced therein and the thermoplastic resin sheet, and even after exposed to a hot and humid environment for a long time, excellent peel strength is maintained, and defects such as peeling are hardly caused.

In this specification, the term "sheet" includes not only individual sheet types but also lengthy (belt-like) types.

The term "lengthy type" refers to a type having a length at least about 5 times or more, and preferably 10 times or more to a width of a sheet, e.g. a type having such a length that it is preserved or transported in a rolled form.

### 1. Sheet made of modified hydrogenated block copolymer

The modified hydrogenated block copolymer having the alkoxysilyl group introduced therein (hereinafter, referred to as "modified hydrogenated block copolymer (E)" in some cases) used in the present invention is a polymer in which the alkoxysilyl group is introduced to a hydrogenated block copolymer (hereinafter, referred to as "hydrogenated block copolymer (D)" in some cases) as a precursor.

The hydrogenated block copolymer (D) is a copolymer in which carbon-carbon unsaturated bonds on a main chain and a side chain and a carbon-carbon unsaturated bond in an aromatic ring in a block copolymer (hereinafter, referred to as "block copolymer (C)" in some cases) composed of a polymer block (A) mainly including an aromatic vinyl compound-derived structural unit (a) and a polymer block (B) mainly including a chain conjugated diene compound-derived structural unit (b) are hydrogenated.

### (1) Block copolymer (C)

The block copolymer (C) is composed of the polymer block (A) mainly including the aromatic vinyl compound-derived structural unit (a) and the polymer block (B) mainly including the chain conjugated diene compound-derived structural unit (b).

The polymer block (A) is a polymer block mainly including the aromatic vinyl compound-derived structural unit (a). The content of the structural unit (a) in the polymer block (A) is normally 90 wt% or more, preferably 95 wt% or more, and more preferably 99 wt% or more. If the content of the structural unit (a) in the polymer block (A) is too small, the heat resistance of the modified hydrogenated block copolymer (E) possibly decreases.

The polymer block (A) may include components other than the structural unit (a). Examples of the other components include the chain conjugated diene-derived structural unit (b) and/or a structural unit derived from another vinyl compound (hereinafter referred to as "structural unit (j)" in some cases). The content of components other than the structural unit (a) is normally 10 wt% or less, preferably 5 wt% or less, and more preferably 1 wt% or less based on the polymer block (A). If the content of the structural unit (b) and/or the structural unit (j) in the polymer block (A) is too large, the heat resistance of the modified hydrogenated block copolymer (E) possibly decreases.

Each of the plural polymer blocks (A) included in the block copolymer (C) may be the same as or different from each other.

The polymer block (B) is a polymer block mainly including the chain conjugated diene compound-derived structural unit (b). The content of the structural unit (b) in the polymer block (B) is normally 70 wt% or more, preferably 80 wt% or more, and more preferably 90 wt% or more. It is preferred that the content of the structural unit (b) in the polymer block (B) is within the above range, because the modified hydrogenated block copolymer (E) has flexibility and the laminated glass obtained by laminating the sheets made of the modified hydrogenated block copolymer (E) between the glass plates hardly causes defects such as cracks even under rapid temperature change in the environment.

The polymer block (B) may include components other than the structural unit (b). Examples of the other components include a structural unit (a) derived from an aromatic vinyl compound and/or a structural unit (j) derived from another vinyl compound. The content of the components other than the structural unit (b) is normally 30 wt% or less, preferably 20 wt% or less, and more preferably 10 wt% or less based on the polymer block (B). If the content of the components other than the structural unit (b) in the polymer block (B) is too large, flexibility of the modified hydrogenated block copolymer (E) is impaired, and e.g. when using the formed sheet for the laminated glass intermediate film, the obtained laminated glass may be readily broken due to rapid temperature change in the environment.

When the block copolymer (C) has a plurality of polymer blocks (B), each of the polymer blocks (B) may be the same as or different from each other.

Examples of the aromatic vinyl compounds include styrene; styrenes having an alkyl group having 1 to 6 carbon atoms as a substituent, such as α-methylstyrene, 2-methylstyrene and 4-t-butylstyrene; styrenes having an alkoxy group having 1 to 6 carbon atoms as a substituent, such as 4-methoxystyrene; styrenes having an aryl group as a substituent, such as 4-phenylstyrene; vinylnaphthalenes such as 1-vinylnaphthalene and 2-vinylnaphthalene. Above all, the aromatic vinyl compounds including no polar group, such as styrene, and the styrenes having an alkyl group having 1 to 6 carbon atoms as a substituent are preferred from the viewpoint of hygroscopicity, and styrene is particularly preferred from the viewpoint of industrial availability.

Examples of the chain conjugated diene-based compounds include 1,3-butadiene, isoprene, 2,3-dimethyl-1,3-butadiene, 1,3-pentadiene, chloroprene. Above all, the chain conjugated diene-based compound including no polar group is preferred from the viewpoint of hygroscopicity, and 1,3-butadiene and isoprene are particularly preferred from the viewpoint of industrial availability.

Examples of other vinyl-based compounds include a chain vinyl compound, a cyclic vinyl compound, an unsaturated cyclic acid anhydride, an unsaturated imide compound. These compounds may have a substituent such as a nitrile group, an alkoxycarbonyl group, a hydroxycarbonyl group and a halogen atom. Above all, the groups having no polar group, such as: a chain olefin having 2 to 20 carbon atoms such as ethylene, propylene, 1-butene, 1-pentene, 1-hexene, 1-heptene, 1-octene, 1-nonene, 1-decene, 1-dodecene, 1-eicosen, 4-methyl-1-pentene and 4,6-dimethyl-1-heptene; a cycloolefin having 5 to 20 carbon atoms such as vinylcyclohexane and norbornene; and a cyclodiene compound such as 1,3-cyclohexadiene and norbornadiene, are preferred from the viewpoint of hygroscopicity.

The block copolymer (C) may be any copolymer composed of the polymer block (A) and the polymer block (B), but a copolymer composed of at least two polymer blocks (A) and at least one polymer block (B) is preferred.

The number of the polymer blocks (A) in the block copolymer (C) is normally 3 or less, preferably 2 or less, and the number of the polymer blocks (B) in the block copolymer (C) is normally 2 or less, preferably 1.

If the numbers of the polymer blocks (A) and the polymer blocks (B) in the block copolymer (C) are large, phase separation between the hydrogenated polymer block derived from the polymer block (A) (hereinafter referred to as "hydrogenated polymer block (Aₕ)" in some cases) and the hydrogenated polymer block derived from the polymer block (B) (hereinafter referred to as "hydrogenated polymer block (Bₕ)" in some cases) may be indistinct in the hydrogenated block copolymer (D) obtained by hydrogenating the block copolymer (C), a glass transition temperature on the high temperature side based on the hydrogenated polymer block (Aₕ) (hereinafter referred to as "Tg₂" in some cases) may decrease, and thus the heat resistance of the modified hydrogenated block copolymer (E) may possibly decrease.

The block form of the block copolymer (C) is not particularly limited, and it may be a chain block or a radial block. The chain block is preferred because the sheet made of the modified hydrogenated block copolymer having an alkoxysilyl group introduced therein is excellent in mechanical strength.

The most preferred form of the block copolymer (C) is a triblock copolymer in which the polymer blocks (A) bind to both ends of the polymer block (B): (A)-(B)-(A), and a pentablock copolymer in which the polymer blocks (B) bind to both ends of the polymer block (A) and furthermore the polymer blocks (A) respectively bind to the other ends of the both polymer blocks (B): (A)-(B)-(A)-(B)-(A).

In addition, when a weight fraction of the whole polymer block (A) relative to the block copolymer (C) is defined as wA and a weight fraction of the whole polymer block (B) relative to the block copolymer (C) is defined as wB, a ratio of wA and wB, wA:wB is 30:70 to 60:40, preferably 35:65 to 55:45, and more preferably 40:60 to 50:50. If the wA is too high, the modified hydrogenated block copolymer (E) has high heat resistance but has low flexibility, and in a case of a laminated glass using a sheet made of the modified hydrogenated block copolymer (E) as an intermediate film, the glass may be readily broken under rapid temperature change in the environment. On the other hand, if the wA is too low, the heat resistance of the modified hydrogenated block copolymer (E) possibly decreases.

The molecular weight of the block copolymer (C) refers to a weight average molecular weight (Mw) in terms of polystyrene determined by gel permeation chromatography (GPC) using tetrahydrofuran (THF) as a solvent, and is normally 40,000 or more, preferably 45,000 or more, and more preferably 50,000 or more, and is normally 200,000 or less, preferably 150,000 or less, and more preferably 100,000 or less. Furthermore, it is normally 40,000 to 200,000, preferably 45,000 to 150,000, and more preferably 50,000 to 100,000.

The molecular weight distribution (Mw/Mn) of the block copolymer (C) is preferably 3 or less, more preferably 2 or less, and particularly preferably 1.5 or less. When the Mw and the Mw/Mn are within the above ranges, the heat resistance and the mechanical strength of the sheet made of the modified hydrogenated block copolymer (E) are improved.

A method for producing the block copolymer (C) is not particularly limited, and e.g. methods described in WO 2003/018656 brochure, WO 2011/096389 brochure can be adopted.

### (2) Hydrogenated block copolymer (D)

The hydrogenated block copolymer (D) is obtained by hydrogenating the carbon-carbon unsaturated bonds on the main chain and the side chain and the carbon-carbon unsaturated bond in the aromatic ring in the block copolymer (C). The hydrogenation ratio of the whole unsaturated bonds is normally 90% or higher, preferably 97% or higher, and more preferably 99% or higher.

The hydrogenation ratio of the carbon-carbon unsaturated bonds on the main chain and the side chain in the block copolymer (C) is preferably 97% or higher, and more preferably 99% or higher. In addition, the hydrogenation ratio of the carbon-carbon unsaturated bond in the aromatic ring in the block copolymer (C) is preferably 97% or higher, and more preferably 99% or higher.

The higher the hydrogenation ratio is, the better the weather resistance, heat resistance and transparency of the formed article are.

The hydrogenation ratio of the hydrogenated block copolymer (D) can be determined by ¹H-NMR measurement of the hydrogenated block copolymer (D).

The hydrogenation method, the reaction form of the unsaturated bond are not particularly limited and may comply with a known method, but a hydrogenation method in which the hydrogenation ratio can be increased and the polymer chain-cleaving reaction is reduced is preferred. Examples of such a hydrogenation method may include methods described in WO 2011/096389 brochure, WO 2012/043708 brochure.

After completion of the hydrogenation reaction, the hydrogenation catalyst, or the hydrogenation catalyst and polymerization catalyst can be removed from the reaction solution, and then the hydrogenated block copolymer (D) can be collected from the resulting solution. The form of the collected hydrogenated block copolymer (D) is not limited, but the copolymer is normally formed into a pellet, which can be subjected to the subsequent introduction reaction of the alkoxysilyl group.

The molecular weight of the hydrogenated block copolymer (D) refers to a weight average molecular weight (Mw) in terms of polystyrene determined by GPC using THF as a solvent, and is normally 40,000 or more, preferably 45,000 or more, and more preferably 50,000 or more, and is normally 200,000 or less, preferably 150,000 or less, and more preferably 100,000 or less. Also, it is normally 40,000 to 200,000, preferably 45,000 to 150,000, and more preferably 50,000 to 100,000.

The molecular weight distribution (Mw/Mn) of the hydrogenated block copolymer (D) is preferably 3 or less, more preferably 2 or less, and particularly preferably 1.5 or less.

When the Mw and the Mw/Mn are within the above ranges, the heat resistance and the mechanical strength of the modified hydrogenated block copolymer (E) are improved.

### (3) Modified hydrogenated block copolymer (E)

The modified hydrogenated block copolymer (E) is a polymer in which an alkoxysilyl group is introduced into the hydrogenated block copolymer (D).

Firm adhesiveness with glass or metal is provided to the modified hydrogenated block copolymer (E) by introducing an alkoxysilyl group into the hydrogenated block copolymer (D).

Examples of the alkoxysilyl group include a tri(alkoxy having 1 to 6 carbon atoms)silyl group such as a trimethoxysilyl group and a triethoxysilyl group; an (alkyl having 1 to 20 carbon atoms)di(alkoxy having 1 to 6 carbon atoms)silyl group such as a methyldimethoxysilyl group, a methyldiethoxysilyl group, an ethyldimethoxysilyl group, an ethyldiethoxysilyl group, a propyldimethoxysilyl group and a propyldiethoxysilyl group; an (aryl)di(alkoxy having 1 to 6 carbon atoms)silyl group such as a phenyldimethoxysilyl group and a phenyldiethoxysilyl group. In addition, the alkoxysilyl group may bind to the hydrogenated block copolymer (D) through a divalent organic group such as an alkylene group having 1 to 20 carbon atoms and an alkyleneoxycarbonylalkylene group having 2 to 20 carbon atoms.

Normally, the amount of the alkoxysilyl group introduced into the hydrogenated block copolymer (D) is preferably 0.1 part by weight or more, more preferably 0.2 part by weight or more, and even more preferably 0.3 part by weight or more, and preferably 10 parts by weight or less, more preferably 5 parts by weight or less, and even more preferably 3 parts by weight or less based on 100 parts by weight of the hydrogenated block copolymer (D). Furthermore, it is preferably 0.1 to 10 parts by weight, more preferably 0.2 to 5 parts by weight, and even more preferably 0.3 to 3 parts by weight.

If the amount of the introduced alkoxysilyl group is too large, crosslinking among the alkoxysilyl groups decomposed with a tiny amount of water proceeds before the obtained modified hydrogenated block copolymer (E) is melt-formed into a desired shape, and thus problems such as gelation and decreased formability due to decreased flowability during melting are readily caused. In addition, if the amount of the introduced alkoxysilyl group is too small, defects such as insufficient adhesive strength of the sheet with a glass plate or a metal are readily caused.

The introduction of the alkoxysilyl group can be confirmed by an IR spectrum. In addition, its introduction amount can be calculated by ¹H-NMR spectrum.

The method for introducing the alkoxysilyl group into the hydrogenated block copolymer (D) is not particularly limited. The method is exemplified by a method in which an alkoxysilyl group is introduced into the hydrogenated block copolymer (D) in the presence of an organic peroxide by reacting (grafting) an ethylenically unsaturated silane compound.

The ethylenically unsaturated silane compound to be used is not particularly limited as long as it grafts with the hydrogenated block copolymer (D) and introduces an alkoxysilyl group into the hydrogenated block copolymer (D). For example, vinyltrimethoxysilane, vinyltriethoxysilane, allyltrimethoxysilane, allyltriethoxysilane, dimethoxymethylvinylsilane, diethoxymethylvinylsilane, p-styryltrimethoxysilane, 3-acryloxypropyltrimethoxysilane, 3-acryloxypropyltriethoxysilane, 3-methacryloxypropyltrimethoxysilane, 3-methacryloxypropyltriethoxysilane, 3 -methacrylo xypropylmethyldimethoxysilane, 3-methacryloxypropylmethyldiethoxysilane, 3-acryloxypropyltrimethoxysilane, are preferably used.

Each of these ethylenically unsaturated silane compounds may be used either alone or in combination of two or more kinds.

As the organic peroxide used for the grafting reaction, one having a one-minute half-life temperature of 170 to 190°C is preferably used.

As the organic peroxide, e.g. t-butylcumyl peroxide, dicumyl peroxide, di-t-hexyl peroxide, 2,5-dimethyl-2,5-di(t-butylperoxy) hexane, di-t-butylperoxide, di(2-t-butylperoxyisopropyl) benzene are preferably used.

Each of these peroxides may be used either alone or in combination of two or more kinds.

The method for reacting the hydrogenated block copolymer (D) with the ethylenically unsaturated silane compound in the presence of peroxide is not particularly limited. For example, an alkoxysilyl group can be easily introduced into the hydrogenated block copolymer (D) by kneading a mixture composed of the hydrogenated block copolymer (D), an ethylenically unsaturated silane compound and peroxide in a molten state by a twin-screw kneader for a desired time.

The temperature required for kneading by the twin-screw kneader is normally 180°C or higher, preferably 185°C or higher, and more preferably 190°C or higher, and normally 220°C or lower, preferably 210°C or lower, and more preferably 200°C or lower. Furthermore, it is normally 180 to 220°C, preferably 185 to 210°C, and more preferably 190 to 200°C.

The time required for heating and kneading is normally around 0.1 to 10 minutes, preferably around 0.2 to 5 minutes, and more preferably around 0.3 to 2 minutes. The intended modified hydrogenated block copolymer (E) can be efficiently produced by continuously kneading and extrusion so that the temperature and the time (detention time) required for heating and kneading are within the above ranges.

The form of the resulting modified hydrogenated block copolymer (E) is not limited, but the copolymer is normally formed into a pellet, which can be subjected to the subsequent forming processing, or into which additives can be blended.

The molecular weight of the modified hydrogenated block copolymer (E) is substantially the same as the molecular weight of the hydrogenated block copolymer (D) used as a raw material, because the alkoxysilyl group is introduced in a small amount. However, since the (D) is reacted with the ethylenically unsaturated silane compound in the presence of a peroxide, crosslinking reaction and cleavage reaction of the polymers concurrently occur, and the molecular weight distribution value of the modified hydrogenated block copolymer (E) tends to become higher.

The molecular weight of the modified hydrogenated block copolymer (E) refers to a weight average molecular weight (Mw) in terms of polystyrene determined by GPC using THF as a solvent, and is normally 40,000 or more, preferably 45,000 or more, and more preferably 50,000 or more, and is normally 200,000 or less, preferably 150,000 or less, and more preferably 100,000 or less. Furthermore, it is normally 40,000 to 200,000, preferably 45,000 to 150,000, more preferably 50,000 to 100,000.

In addition, its molecular weight distribution (Mw/Mn) is preferably 3.5 or less, more preferably 2.5 or less, and particularly preferably 2.0 or less.

When the Mw and the Mw/Mn are within the above ranges, the heat resistance and the mechanical strength of the sheet made of the modified hydrogenated block copolymer (E) are maintained.

### (4) Sheet made of modified hydrogenated block copolymer (E)

A sheet (hereinafter referred to as "sheet (F)" in some cases) made of the modified hydrogenated block copolymer (E) can be obtained by forming a resin composition containing the modified hydrogenated block copolymer (E) as a main component, and if necessary, various additives into a sheet.

The content of the modified hydrogenated block copolymer (E) in the sheet (F) is normally 70 wt% or more, preferably 80 wt% or more, and more preferably 90 wt% or more.

Examples of the additives include a softener for adjusting adhesion temperature and the like, a UV absorber for shielding ultraviolet ray, an infrared absorber for shielding infrared ray, an antioxidant and an antiblocking agent for enhancing the processability, a light stabilizer for enhancing durability.

Specific examples of the softener include a low-molecular-weight polymer such as polyisobutylene, polybutene, poly-1-octene and ethylene/α-olefin copolymer, and a hydrogenated product thereof; a low-molecular-weight polymer such as polyisoprene and polyisoprene/butadiene copolymer, and a hydrogenated product thereof; and the like. The softener may be used either alone or in combination of two or more kinds. Above all, particularly the low-molecular-weight hydrogenated polyisobutylene (number average molecular weight is normally 300 to 5,000) and the low-molecular-weight hydrogenated polyisoprene (number average molecular weight is normally 300 to 5,000) are preferred in that they can maintain transparency and light resistance and have an excellent filling effect.

As the UV absorber, an oxybenzophenone-based compound, a benzotriazole-based compound, a salicylate ester-based compound, a benzophenone-based compound, a triazine-based compound and the like can be used.

As the infrared absorber, a metal oxide particulate, a near infrared-absorbing pigment can be used.

Examples of the metal oxide particulate include tin oxide particulates such as tin oxide, aluminum-doped tin oxide, indium-doped tin oxide and antimony-doped tin oxide; zinc oxide particulates such as zinc oxide, aluminum-doped zinc oxide, indium-doped zinc oxide, gallium-doped zinc oxide, tin-doped zinc oxide and silicon-doped zinc oxide; titanium oxide particulates such as titanium oxide and niobium-doped titanium oxide; tungsten oxide particulates such as tungsten oxide, sodium-doped tungsten oxide, cesium-doped tungsten oxide, thallium-doped tungsten oxide and rubidium-doped tungsten oxide; indium oxide particulates such as indium oxide and tin-doped indium oxide.

As the near infrared-absorbing pigment, a near infrared-absorbing pigment such as a phthalocyanine compound, a naphthalocyanine compound, an immonium compound, a diimmonium compound, a polymethine compound, a diphenylmethane compound, an anthraquinone compound, a pentadiene compound, an azomethine compound and lanthanum hexaboride can be used.

As the antioxidant, a phosphorus-based antioxidant, a phenol-based antioxidant and a sulfur-based antioxidant can be used.

As the light stabilizer, a hindered amine-based light stabilizer can be used.

The amount of the added softening agent is normally 30 parts by weight or less, and preferably 20 parts by weight or less based on 100 parts by weight of the modified hydrogenated block copolymer (E). The addition amount can be appropriately selected depending on the required adhesion temperature.

In relation to the addition amount of the UV absorber, the infrared absorber, the antioxidant, the antiblocking agent, the light stabilizer, the total amount of these additives is normally 0.001 part by weight or more, preferably 0.01 part by weight or more, and more preferably 0.05 part by weight or more, and normally 5 parts by weight or less, preferably 4 parts by weight or less, and more preferably 3 parts by weight or less, based on 100 parts by weight of the modified hydrogenated block copolymer (E). Furthermore, the total amount is normally 0.001 to 5 parts by weight, preferably 0.01 to 4 parts by weight, and more preferably 0.05 to 3 parts by weight.

As a method for blending various additives into the modified hydrogenated block copolymer (E), a known method commonly used can be applied. For example, a resin composition for producing the sheet (F) in which additives are uniformly dispersed can be produced by a method in which a modified hydrogenated block copolymer (E) pellet and additives are uniformly mixed using a mixer such as a tumbler, a ribbon blender, a Henschel type mixer, then melt-mixed and extruded into a pellet form by a continuous melt kneader such as a twin-screw extruder,; a method in which the modified hydrogenated block copolymer (E) is melt-mixed and extruded into a pellet form by a twin-screw extruder equipped with a side feeder while continuously adding the additives from the side feeder.

A method for producing the sheet (F) by forming the resin composition for producing the sheet (F) is not particularly limited, and a known forming method such as a melt extrusion method, an inflation forming method and a calendar forming method can be applied. Above all, the melt extrusion forming method is preferred. In addition, a T-die method is preferably used from the viewpoint of obtaining a relatively economical and high-quality product.

In the case of forming the sheet by the melt extrusion method, the resin temperature is appropriately selected in a range of normally 170 to 250°C, preferably 180 to 240°C, and more preferably 190 to 230°C.

If the resin temperature is too low, the flowability is deteriorated, and defects such as orange-peel-like face and die line are readily caused in the obtained sheet (F), additionally the extrusion rate of the sheet (F) cannot be increased, and thus industrial disadvantages may be caused. If the resin temperature is too high, the adhesiveness of the sheet (F) with the glass may be poor, the storage stability of the sheet (F) may be decreased, and thus the adhesiveness with glass after preserved under a normal temperature and normal humidity environment for a long time may be decreased.

The surface of the sheet (F) can be a planar shape, an embossed shape. Also, to prevent blocking between the sheets (F), the resin sheet (F) can be preserved in such a way that one side of the sheet is overlapped with a release film.

The thickness of the sheet (F) is not particularly limited, but is normally 0.02 mm or more, preferably 0.05 mm or more, and more preferably 0.1 mm or more, and normally 10 mm or less, preferably 5 mm or less, and more preferably 3 mm or less. Furthermore, it is normally 0.02 to 10 mm, preferably 0.05 to 5 mm, and more preferably 0.1 to 3 mm.

When the thickness of the sheet (F) is within the above range, the sheet can be suitably used for forming a composite assembly as an adhesive e.g. by disposing it between a glass sheet and a thermoplastic resin sheet.

The thickness of the sheet (F) may be uniform or non-uniform. In addition, the sheet (F) may have a non-uniform structure such as a concave-convex pattern, an embossed shape, a step, a groove shape and a through hole.

### 2. Thermoplastic resin sheet

The thermoplastic resin sheet used in the present invention (hereinafter referred to as "resin sheet (S)" in some cases) is a sheet-like formed article of a thermoplastic resin or a resin composition containing the thermoplastic resin.

The resin sheet (S) used in the present invention is preferably transparent.

For example, when the laminate is used in an application requiring light transmittance or transparency of the laminated glass, a laminate having good transparency can be produced by using the transparent resin sheet (S).

Examples of the resin material for the resin sheet (S) include a polyolefin-based resin such as polyethylene, polypropylene, poly-1-butene, poly-4-methylpentene, an ethylene/propylene copolymer, an ethylene/1-butene copolymer, an ethylene/4-methylpentene copolymer, an ethylene/1-octene copolymer, an ethylene/1-butene/1-octene copolymer, an ethylene/propylene/dicyclopentadiene copolymer, an ethylene/propylene/5-ethylidene-2-norbornene copolymer, an ethylene/propylene/5-vinyl-2-norbornene copolymer, an ethylene/1-butene/dicyclopentadiene copolymer, an ethylene/1-butene/5-ethylidene-2-norbornene copolymer and an ethylene/1-butene/vinylnorbomene copolymer;
a cycloolefin polymer such as an ethylene/norbornene copolymer, an ethylene/tetracyclododecene copolymer, a hydrogenated ring-opening metathesis polymer of a norbornene derivative and a cyclohexadiene polymer;
an olefin/(meth) acrylate ester copolymer [herein, the "(meth) acrylate" means acrylate or methacrylate. This also applies to the followings.] such as an ethylene/methyl methacrylate copolymer, an ethylene/ethyl methacrylate copolymer, an ethylene/methyl acrylate copolymer and an ethylene/ethyl acrylate copolymer;
an ionomer resin obtained by reacting an ethylene/unsaturated carboxylic acid random copolymer with a metal compound;
a polyester resin such as polyethylene terephthalate, polybutylene terephthalate, polyethylene naphthalate and polycyclohexanedimethylene terephthalate;
a polycarbonate resin obtained by reacting a bisphenol with a carbonyl compound such as carbonyl chloride, such as bisphenol A, 4,4'-dihydroxybiphenyl, bis(4-hydroxyphenyl) methane, 1,1-bis(4-hydroxyphenyl) ethane, 1,1-bis(4-hydroxyphenyl) phenylethane, 2,2-bis(3-methyl-4-hydroxyphenyl) propane, 1,1-bis(4-hydroxyphenyl) cyclohexane, 2,2-bis(3-phenyl-4-hydroxyphenyl) propane, 2,2-bis(3-isopropyl-4-hydroxyphenyl) propane, 2,2-bis(4-hydroxyphenyl) butane, 2,2-bis(3,5-dimethyl-4-hydroxyphenyl) propane, 2,2-bis(3,5-dibromo-4-hydroxyphenyl) propane, 4,4'-dihydroxydiphenyl sulfone, 4,4'-dihydroxydiphenyl sulfoxide, 4,4'-dihydroxydiphenyl sulfide, 3,3'-dimethyl-4,4'-dihydroxydiphenyl sulfide, 4,4'-dihydroxydiphenyl oxide and 9,9-bis(4-hydroxyphenyl) fluorene;
a styrene-based resin such as polystyrene, a styrene/methyl methacrylate copolymer and a styrene/acrylonitrile copolymer;
a (meth)acrylate ester (co)polymer such as polymethyl methacrylate, polymethyl acrylate, a methyl methacrylate/glycidyl methacrylate copolymer, and a methyl methacrylate/tricyclodecyl methacrylate copolymer, and the like; and an ethylene/vinyl acetate copolymer;
a halogen-containing resin such as polyvinyl chloride, polyvinylidene chloride, polyvinyl fluoride, polyvinylidene fluoride and an ethylene/tetrafluoroethylene copolymer;
a polyurethane-based resin;
an epoxy resin;
an aromatic resin such as polyetheretherketone, polysulfone, polyethersulfone and polyarylate;
a polyamide-based resin such as nylon 6, nylon 66, nylon 11, nylon 12 and nylon 6T.

These resins may be used either alone or in combination of two or more kinds.

Above all, the polycarbonate resin, the polyester resin and the (meth)acrylate (co)polymer are more preferred from the viewpoint of excellent transparency, mechanical strength when used in such a way that it is laminated with a glass sheet.

The resin sheet (S) can be obtained by forming a resin composition containing the thermoplastic resin and, if necessary, various additives into a sheet.

The content of the thermoplastic resin in the resin sheet (S) is normally 70 wt% or more, preferably 80 wt% or more, and more preferably 90 wt% or more.

Examples of the additives include a softener for adjusting adhesion temperature, a UV absorber for shielding ultraviolet ray, an infrared absorber for shielding infrared ray, an antioxidant and an antiblocking agent for enhancing the processability, a light stabilizer for enhancing durability. Specific examples thereof include the additives similar to those listed for the additives to be added to the sheet (F).

The method for forming the resin composition containing the thermoplastic resin and, if necessary, various additives into a sheet is not particularly limited, and examples thereof include known forming methods such as a melt extrusion method, an inflation forming method and a calendar forming method.

The thickness of the resin sheet (S) is not particularly limited, but is normally 0.02 mm or more, preferably 0.05 mm or more, and more preferably 0.1 mm or more, and normally 10 mm or less, preferably 5 mm or less, and more preferably 3 mm or less. Furthermore, it is normally 0.02 to 10 mm, preferably 0.05 to 5 mm, and more preferably 0.1 to 3 mm.

When the thickness of the resin sheet (S) is within the above range, the piercing resistance and the impact resistance of the glass sheet can be enhanced e.g. in a case that a glass sheet is bonded with the resin sheet (S) to form a laminate by using the sheet (F) made of the modified hydrogenated block copolymer (E).

The thickness of the resin sheet (F) may be uniform or non-uniform. In addition, the resin sheet (S) may have a non-uniform structure such as a concave-convex pattern, an embossed shape, a step, a groove shape and a through hole.

### 2. Method for producing assembly

The method for producing the assembly according to one embodiment of the invention is a method for producing the assembly by bonding the sheet (F) made of the modified hydrogenated block copolymer (E) with the resin sheet (S), and characterized in that the bonding includes the following steps (1) and (2).
Step (1): a step of activating the adherend surface of the resin sheet (S) with at least one selected from plasma exposure, excimer UV exposure and corona discharge.
Step (2): a step of superposing the adherend surfaces of the sheet (F) made of the modified hydrogenated block copolymer (E) with the resin sheet (S), to be subjected to thermally press-bonding.

In the step (1), at least one treatment selected from plasma exposure, excimer UV exposure and corona discharge is applied on the adherend surface of the resin sheet (S) to activate the adherend surface of the resin sheet (S). In the present invention, plasma exposure and/or corona discharge are preferred because the surface can be uniformly treated.

Examples of the plasma exposure include normal-pressure plasma exposure for plasma exposure at atmospheric pressure and reduced-pressure plasma exposure for plasma exposure at reduced pressure, and the normal-pressure plasma exposure is preferred from the viewpoint of uniform surface treatment by a simpler method.

Preferably, the normal-pressure plasma exposure is carried out under an atmosphere of at least one gas selected from hydrogen, helium, nitrogen, oxygen and argon at atmospheric pressure, and more preferably, it is carried out under an atmosphere of a mixed gas of nitrogen and dry air or an atmosphere of a mixed gas of nitrogen and oxygen at atmospheric pressure.

The flow rate of nitrogen is preferably 50 to 150 NL/min, and the flow rate of dry air or oxygen is preferably 0.1 to 5 NL/min.

The output of the plasma exposure is preferably 0.5 to 2 kW.

The frequency of the plasma exposure is preferably a resonance frequency corresponding to the output, and specifically, it is preferably within a range of 10 to 100 KHz.

The exposure rate of the plasma exposure is preferably 1 to 100 cm/min.

The distance between the plasma source and the resin sheet (S) is preferably 1 to 10 mm.

When plasma exposure is carried out at reduced pressure, plasma treatment is carried out preferably using a low-pressure gas (argon gas, oxygen gas, nitrogen gas, or a mixed gas thereof) at 0.001 to 10 kPa (absolute pressure).

As the low-pressure gas, it is particularly preferred to use the mixed gas of nitrogen and oxygen.

The mixing ratio of nitrogen to oxygen is preferably 10:1 to 1:10 by volume, and the flow rate of the mixed gas is preferably 0.1 to 10 NL/min.

The output of the plasma exposure is preferably 50 to 500 W.

Preferably, the corona discharge is carried out under a dry-air atmosphere, and the flow rate of the dry air is preferably 10 to 100 NL/min. The output of corona discharge is preferably 250 to 1000 W, and the discharge power rate is preferably 20 to 550 W·min/m². The distance between the electrode and the resin sheet (S) is preferably 1 to 20 mm.

Preferably, the excimer UV exposure is carried out using an excimer UV lamp while flowing a mixed gas of nitrogen and dry air or oxygen. The oxygen concentration in the mixed gas is normally 1 to 15%, and preferably 3 to 5%. The flow rate of the mixed gas is preferably 3 to 7 L/min.

The distance between the excimer UV lamp and the adherend surface of the resin sheet (S) is preferably 10 mm or shorter, and more preferably 1 to 5 mm. The irradiation intensity is preferably 20 to 100 mW, and more preferably 30 to 50 mW.

In the step (1), preferably at least one activation treatment selected from plasma exposure, excimer UV exposure and corona discharge is applied also on the adherend surface of the sheet (F) made of the modified hydrogenated block copolymer (E). The adhesive strength of the assembly according to one embodiment of the invention can be further enhanced by activating also the adherend surface of the sheet (F).

The method for activating the adherend surface of the sheet (F) with at least one selected from plasma exposure, excimer UV exposure and corona discharge includes the method similar to the method for activating the adherend surface of the resin sheet (S) with at least one selected from plasma exposure, excimer UV exposure and corona discharge. Above all, plasma exposure and/or corona discharge are preferred as a method for activating the adherend surface of the sheet (F), because the surface can be uniformly treated.

The step (2) is a step of superposing the adherend surfaces of the sheet (F) and the resin sheet (S) to be subjected to thermally press-bonding.

The method for superposing the adherend surfaces of the sheet (F) with the resin sheet (S) to be subjected to thermally press-bonding is not particularly limited. Examples of the method include a method in which the adherend surface of the sheet (F) is superposed with the adherend surface of the resin sheet (S), and, if necessary, other members are superposed, and the obtained laminate is put into a flexible bag (hereinafter referred to as "bag" in some cases), and the layers are bonded while degassing the bag; a method in which the laminate is put into the bag, the bag is degassed, and then bonded by heat-pressurization in an autoclave.

In the case of pressurization in an autoclave, the applied pressure is normally 0.1 to 1.5 MPa, preferably 0.2 to 1.2 MPa, and more preferably 0.3 to 1.0 MPa.

In the case of heating, the temperature is normally 80 to 180°C, preferably 90 to 160°C, and more preferably 90 to 140°C.

When the temperature and the pressure are within the above ranges, sufficient adhesion strength is obtained, and defects such as bubbles are hardly caused on the adherend surface.

The time for pressurization in the autoclave is normally 10 to 60 minutes, preferably 15 to 50 minutes, and more preferably 20 to 40 minutes.

The method for forming an assembly by putting the laminate into the bag to be subjected to heat-pressing is particularly useful as a method for producing an assembly having a curved shape like an automobile laminated glass.

In addition, a method in which a laminate is pressurized and press-bonded using a pressurizer such as a press, a vacuum laminator, a vacuum press and a roll laminator, can also be applied, as long as the assembly has a planar shape.

The pressure at the time of pressurization is normally 0.1 to 10 MPa, and preferably 0.5 to 3 MPa.

The time for the pressurization is normally 1 to 30 minutes, and preferably 5 to 10 minutes.

In the assembly obtained as described above, adhesion is firm on the interface between the sheet (F) and the resin sheet (S), the high adhesion strength is maintained even after exposed to a hot and humid environment for a long time, and defects such as peeling are hardly caused.

### 3. Assembly

In the assembly according to one embodiment of the invention, adhesiveness between the sheet made of the modified hydrogenated block copolymer having an alkoxysilyl group introduced therein and the thermoplastic resin sheet is sufficient, excellent peel strength is maintained even after exposed to a hot and humid environment for a long time, and defects such as peeling are hardly caused.

The assembly according to one embodiment of the invention is an assembly obtained by bonding the sheet (F) made of the modified hydrogenated block copolymer (E) having an alkoxysilyl group introduced therein with the resin sheet (S), wherein the peel strength of the adherend surface is 4 N/cm or higher, preferably 6 N/cm or higher, more preferably 8 N/cm or higher, and still more preferably 10 N/cm or higher. When the peel strength of the adherend surface is 4 N/cm or higher, a high adhesion strength is maintained even when the assembly is exposed to a hot and humid environment for a long time. The peel strength can be measured e.g. by the method described in Examples.

Also when an impact resistance test is carried out using the assembly according to one embodiment of the invention, the bonding surface between the sheet (F) and the resin sheet (S) is hardly peeled.

The assembly according to one embodiment of the invention is an assembly having an area where a part or whole of the surface between at least one or more of the sheets (F) and at least one of the resin sheets (S) in contact with each other is bonded.

The surfaces of the sheet (F) and/or the resin sheet (S) facing each adherend surface may be respectively bonded with other members made of glass, metal, resin.

Specific examples of the assembly according to one embodiment of the invention include assemblies having configurations such as: a two-layer assembly composed of a configuration of sheet (F)/resin sheet (S); a three-layer assembly composed of a configuration of sheet (F)/resin sheet (S)/sheet (F), resin sheet (S)/sheet (F)/resin sheet (S), glass sheet/sheet (F)/resin sheet, metal foil/sheet (F)/resin sheet (S) or the like; a four-layer assembly composed of a configuration of glass sheet/sheet (F)/resin sheet (S)/sheet (F), metal foil/sheet (F)/resin sheet (S)/sheet (F), resin sheet (S)/sheet (F)/resin sheet (S)/sheet (F) ; a five-layer assembly composed of a configuration of glass sheet/sheet (F)/resin sheet/sheet (F)/glass sheet, glass sheet/sheet (F)/resin sheet (S)/sheet (F)/metal foil, glass sheet/sheet (F)/resin sheet (S)/sheet (F)/resin sheet (S), metal foil/sheet (F)/resin sheet (S)/sheet (F)/metal foil, and a multilayer assembly having a large number of sheets composed of sheet (F)/resin sheet laminated between glass sheets.

In addition, these configurations may include a functional film such as a heat reflecting film, a UV shielding film, an electromagnetic wave shielding film, an infrared transmission film and a dichroic mirror; a functional element such as a liquid crystal display element, an EL display element, a light control element, a thermochromic element, an electrochromic element and a photochromic element; a sheet for design purpose such as dyed fabric, Japanese paper, color film, fiber and photograph.

The positions of the functional film, the functional element, the sheet for design purpose on the laminate is not particularly limited. When the functional film, the functional element, the sheet for design purpose are not strong in resistance to external factors such as light, moisture, solvent and external force, it is preferred to dispose them on the inner layer of the laminate from the viewpoint of protection for the functional film, the functional element, the designable sheet and the like.

The assembly according to one embodiment of the invention is useful as a packaging material such as a laminated glass used for automobile windows and building windows, a sunroof glass, a bulletproof glass, a light guide plate used for liquid crystal displays, lighting equipments, a transparent adhesive sheet used for touch panels, a phase difference film, a polarizing plate protective film, a medicine package, a medical equipment, a flexible printed board, an electrical insulating material, an electronic component processor, an optical mirror, an equipment for light-receiving elements, an automobile bumper, a room mirror, an automobile light, a reflector, an instrument panel, a container for microwave ovens, a wrap, a roof glass and a heat-insulating wall material for rooms.

For example, when the assembly according to one embodiment of the invention is a laminated glass, the thicknesses, the materials and the like of the two or more glass plates to be used may be respectively identical to or different from each other.

The thickness of the glass plate to be used is not particularly limited, but is normally 0.05 to 10 mm. In addition, glass plates with different thicknesses e.g. having a five-layer structure of 2.1 mm thickness glass plate / 0.76 mm thickness sheet (F) / 2 mm thickness polycarbonate resin sheet (S) / 0.76 mm thickness sheet (F) / 0.7 mm thickness sheet glass, can also be used.

### 4. Sheet made of modified hydrogenated block copolymer, obtained by activation

The sheet made of the modified hydrogenated block copolymer obtained by activation according to one embodiment of the invention (hereinafter referred to as "sheet G" in some cases) is a sheet obtained by activating at least one surface of the sheet [sheet (F)] made of the modified hydrogenated block copolymer (E).

Examples of the activation include at least one selected from plasma exposure, excimer UV exposure and corona discharge. Above all, plasma exposure and/or corona discharge are preferred because the surface can be uniformly treated. The conditions of activation using plasma exposure, excimer UV exposure and corona discharge are the conditions similar to those for the activation (plasma exposure, excimer UV exposure and corona discharge) applied on the adherend surface of the resin sheet (S).

In addition, when preserving or transporting the sheet (G), e.g. a protective sheet may be laminated to protect the activated surface of the sheet (G). The protective sheet is not particularly limited as long as it is a sheet that can be easily released from the sheet (G), and a conventionally known sheet can be used. Examples thereof include plastic films made of polyethylene, polypropylene, polybutene, polybutadiene, polymethylpentene, polyvinyl chloride, a vinyl chloride copolymer, polyethylene terephthalate, polybutylene terephthalate, polyurethane, an ethylene-vinyl acetate copolymer. Examples of the other releasable protective sheets include a protective sheet, paper and the like which are treated so as to be releasable by coating the surfaces with a fluorine-based resin, a silicone resin.

The activated surface of the sheet (G) is excellent in not only adhesiveness with a thermoplastic resin formed article but also adhesiveness with a formed article made of a curable resin composition, a formed article made of a composite material composed of a curable resin with glass, paper, metal, carbon fiber a glass sheet, a metal foil. Hereinafter, the formed article made of the curable resin composition, or the formed article made of the composite material composed of a curable resin with glass, paper, metal, carbon fiber or the like are referred to as "formed article (X)".

Examples of the curable resin include a thermosetting resin, and a photocurable resin to be cured by exposure with light such as UV ray and electron ray.

Examples of the thermosetting resin include a phenol resin, an acrylic resin, an epoxy resin, a melamine resin, a silicon resin, an acrylic-modified silicon resin, a urethane resin.

Examples of the photocurable resin include an epoxy acrylate resin, a polyester acrylate resin, a methacrylate-modified product thereof, and the like.

Examples of the composite material include substrates having a glass cloth, a glass nonwoven fabric, a paper substrate or the like impregnated with an epoxy resin, a polyimide resin, a phenol resin.

The shape of the adherend surface of the formed article (X) with the sheet (G) is not particularly limited, and it may be any shape of a planar shape, a curved shape.

Specific examples of the assembly of the sheet (G) and the formed article (X) according to one embodiment of the invention include assemblies having configurations such as a two-layer assembly composed of a configuration of sheet (G) / formed article (X);
a three-layer assembly composed of a configuration of sheet (G) / formed article (X) / sheet (G), formed article (X) / sheet (G) / formed article (X), glass sheet / formed article (X) / sheet (G), metal foil / sheet (G) / formed article (X) or the like;
a four-layer assembly composed of a configuration of glass sheet/sheet (G)/formed article (X)/formed article (X), metal foil/sheet (G)/resin sheet (G)/formed article (X), resin sheet (G)/formed article (X)/resin sheet (G)/formed article (X);
a five-layer assembly composed of a configuration of glass sheet/sheet (G)/formed article (X)/sheet (G)/glass sheet, glass sheet/sheet (G)/formed article (X)/sheet (G)/metal foil, glass sheet/sheet (G)/formed article (X)/sheet (G)/formed article (X), metal foil/sheet (G)/formed article (X)/sheet (G)/metal foil, a multilayer assembly having a large number of units composed of [sheet (G)/formed article (X)] laminated between glass sheets.

### EXAMPLE

The present invention will be described below in more detail with reference to Examples, but the present invention is not limited only to the following examples. Note that the units "parts" and "%" respectively refer to "parts by weight" and "wt%" unless otherwise indicated.

The measurement and evaluation in these Examples were carried out in accordance with the following method.

### (1) Weight average molecular weight (Mw) and molecular weight distribution (Mw/Mn)

The weight average molecular weights (Mw) of the block copolymer (C), the hydrogenated block copolymer (D) and the modified hydrogenated block copolymer (E) were measured as a value expressed in terms of standard polystyrene determined by GPC using a THF as an eluate at 38°C. As a measuring apparatus, HLC8020GPC manufactured by Tosoh Corporation was used.

### (2) Hydrogenation ratio

The hydrogenation ratios of the main chain, the side chain and the aromatic ring in the hydrogenated block copolymer (D) are calculated by measuring ¹H-NMR spectra.

### (3) Adhesiveness

A test piece of 200 mm in length and 25 mm in width was sampled from an assembly having the sheet (F) of the modified hydrogenated block copolymer (E) and the resin sheet (S) adhesively integrated. From the non-adhering part of the test piece, a peel strength was measured by carrying out a T-peel test (in accordance with JIS 6854-3: 1999) with peel rate of 100 mm/min using an autograph (AGS-X, manufactured by Shimadzu Corporation) in accordance with JIS K6854-3.

The case where the peel strength was 4 N/cm or higher was rated as "Good", and the case of lower than 4 N/cm was rated as "Bad".

### (4) Moisture resistance

The assembly having the sheet (F) of the modified hydrogenated block copolymer (E) prepared for evaluating the adhesiveness and the resin sheet (S) adhesively integrated was preserved under a hot and humid environment (in a thermohygrostat bath at a temperature of 50°C and a relative humidity of 95% RH) for 336 hours, and then the peel strength was measured for evaluation.

The case where the peel strength was 4 N/cm or higher was rated as "Good", and the case of lower than 4 N/cm was rated as "Bad".

### [Production Example 1] Production of sheet (F1) of modified hydrogenated block copolymer (E1) having alkoxysilyl group introduced therein:

A pellet of the modified hydrogenated block copolymer (E1), in which 1.8 part of vinyltrimethoxysilane bound to 100 parts of hydrogenated triblock copolymer (D1) (Mw=48,200, Mw/Mn=1.04, hydrogenation ratio of the carbon-carbon unsaturated bonds on the main chain and the side chain and the carbon-carbon unsaturated bond in the aromatic ring ≈ 100%) produced by using 50 parts of styrene and 50 parts of isoprene, was produced in the same manner as in the method described in WO 2014/077267 brochure.

The modified hydrogenated block copolymer (E1) was extruded using a twin-screw extruder equipped with a T-die having a width of 400 mm (product name: "TEM-37B" manufactured by TOSHIBA MACHINE CO., LTD.) and a sheet take-off device equipped with an emboss roll having a satin-finish pattern under a forming condition of a cylinder temperature of 200°C, a T-die temperature of 200°C and an emboss roll temperature of 50°C to prepare a sheet (F1) having a thickness of 330 µm.

### [Example 1]

A test piece of 300 mm in length and 200 mm in width was prepared from a polycarbonate resin sheet (S1) (product name: "Panlite sheet", PC-2151, thickness: 0.2 mm, manufactured by Teijin Chemicals Ltd.), and its one side was subjected to corona discharge with an output of 60 W under a condition of a distance between an electrode and the sample of 10 mm and a processing speed of 1 m/min, using a corona surface treatment device (A3SW-LW, manufactured by WEDGE co., ltd.).

The treated surface of the polycarbonate resin sheet (S1_{C}) after subjected to corona discharge and the test piece of 300 mm in length and 200 mm in width cut out from the sheet (F1) prepared in Production Example 1 were superposed facing each other while a release film was inserted therebetween at an area of 50 mm from a longitudinal end part.

The laminate of the sheet (F1) and the resin sheet (S1_{C}) was put into a resin bag of 75 µm in thickness having a layer configuration of NY/adherend layer/PP. Both sides of the bag were heat-sealed by a heat sealer so that 200 mm width of the central portion on the bag opening was left without seal, and then the opening was heat-sealed while degassing the bag using a sealed packing machine (BH-951, manufactured by Panasonic Corporation) to seal-pack the laminate. Subsequently, the seal-packed laminate was put into an autoclave and heat-pressed at a temperature of 140°C and a pressure of 0.8 MPa for 30 minutes to produce an assembly (F1/S1c).

AT-peel test piece was cut out from the obtained assembly (F1/S1_{C}), the peel strength at the interface between the sheet (F1) and the resin sheet (S1_{C}) was measured, as a result, the peel strength was 12 N/cm, and the adhesiveness was rated as "Good". Furthermore, even after preserved under a hot and humid environment, the peel strength was 11 N/cm, and the moisture resistance was also rated as "Good".

### [Example 2]

In addition to the polycarbonate resin sheet (S1), the sheet (F1) made of the modified hydrogenated block copolymer (E1) was also subjected to the same corona discharge as in Example 1, and the treated surface of the sheet (F1_{C}) after subjected to corona discharge and the treated surface of the resin sheet (S1_{C}) were superposed facing each other.

The laminate of the sheet (F1_{C}) and the resin sheet (S1_{C}) was heat-pressed in the same manner as in Example 1 to produce an assembly (F1_{C}/S1_{C}).

As a result of measuring the peel strength at the interface of the obtained assembly (F1_{C}/S1_{C}), the peel strength was 17 N/cm, and the adhesiveness was rated as "Good". Furthermore, after preserved under a hot and humid environment, the peel strength was 17 N/cm, and the moisture resistance was also rated as "Good".

### [Example 3]

An assembly (F1/S2_{C}) was produced in the same manner as in Example 1 except that an acrylic resin sheet (S2) (product name "ACRYPLEN", HBA 002P, thickness: 0.125 mm, manufactured by Mitsubishi Rayon Co., Ltd.) was used instead of the polycarbonate resin sheet.

As a result of measuring the peel strength at the interface of the obtained assembly (F1/S2_{C}), the peel strength was 6 N/cm, and the adhesiveness was rated as "Good". Furthermore, after preserved under a hot and humid environment, the peel strength was 5 N/cm, and the moisture resistance was also rated as "Good".

### [Example 4]

An assembly (F1_{C}/S2_{C}) was produced in the same manner as in Example 2 except that the acrylic resin sheet (S2) was used instead of the polycarbonate resin sheet.

As a result of measuring the peel strength at the interface of the obtained assembly (F1_{C}/S2_{C}), the peel strength was 8 N/cm, and the adhesiveness was rated as "Good". Furthermore, after preserved under a hot and humid environment, the peel strength was 7 N/cm, and the moisture resistance was also rated as "Good".

### [Example 5]

An assembly (F1/S3_{C}) was produced in the same manner as in Example 1 except that a polyethylene terephthalate resin sheet (S3) (product name: Lumirror, S10, thickness: 0.25 mm, manufactured by Toray Industries, Inc.) was used instead of the polycarbonate resin sheet.

As a result of measuring the peel strength at the interface of the obtained assembly (F1/S3_{C}), the peel strength was 10 N/cm, and the adhesiveness was rated as "Good". Furthermore, after preserved under a hot and humid environment, the peel strength was 10 N/cm, and the moisture resistance was also rated as "Good".

### [Example 6]

An assembly (F1_{C}/S3_{C}) was produced in the same manner as in Example 2 except that the polyethylene terephthalate resin sheet (S3) was used instead of the polycarbonate resin sheet.

As a result of measuring the peel strength at the interface of the obtained assembly (F1_{C}/S3_{C}), the peel strength was 13 N/cm, and the adhesiveness was rated as "Good". Furthermore, after preserved under a hot and humid environment, the peel strength was 12 N/cm, and the moisture resistance was also rated as "Good".

### [Example 7]

An assembly (F1/S4_{C}) was produced in the same manner as in Example 1 except that a hard vinyl chloride resin sheet (S4) (product name: "Sunday sheet", transparent type, thickness: 0.5 mm, manufactured by ACRYSUNDAY Co., Ltd.) was used instead of the polycarbonate resin sheet.

As a result of measuring the peel strength at the interface of the obtained assembly (F1/S4_{C}), the peel strength was 15 N/cm, and the adhesiveness was rated as "Good". Furthermore, after preserved under a hot and humid environment, the peel strength was 15 N/cm, and the moisture resistance was also rated as "Good".

### [Example 8]

An assembly (F1_{C}/S4_{C}) was produced in the same manner as in Example 2 except that the hard vinyl chloride resin sheet (S4) was used instead of the polycarbonate resin sheet.

As a result of measuring the peel strength at the interface of the obtained assembly (F1_{C}/S4_{C}), the peel strength was 20 N/cm, and the adhesiveness was rated as "Good". Furthermore, after preserved under a hot and humid environment, the peel strength was 21 N/cm, and the moisture resistance was also rated as "Good".

### [Example 9]

A test piece of 300 mm in length and 300 mm in width was prepared from the same polycarbonate resin sheet (S1) as used in Example 1, and its both sides were subjected to corona discharge under the same condition as Example 1.

A polycarbonate resin sheet (S1_{CC}) of which the both sides had been subjected to corona discharge, a blue sheet glass of 300 mm in length, 300 mm in width and 1.1 mm in thickness and a test piece of 300 mm in length and 300 mm in width cut out from the sheet (F1) prepared in Production Example 1 were used to be laminated in an order of glass sheet/(F1)/(S1_{CC})/(F1)/(S1_{CC})/(F1)/(S1_{CC})/(F1)/(S1_{CC})(F1)/glass sheet.

The laminate of this glass sheet, the sheet (F1) and the resin sheet (S1_{CC}) was put into a resin bag, hermetically packed, and then heat-pressed in an autoclave in the same manner as in Example 1, to produce a laminated glass assembly (total thickness: 4.65 mm, weight per unit area: 8.0 kg/m²) in which five sheets (F1) and four resin sheets (S1_{CC}) were alternately laminated between two glass sheets.

Onto a test piece of this laminated glass assembly, 227 g mass of steel ball was dropped from heights of 9 m, and the existence or non-existence of piercing and the total weight of peeled pieces of the glass from the opposite side of the impacted surface were measured in accordance with JIS R3212 method (Test methods of safety glazing materials for road vehicles).

As a result of evaluating the five laminated glass assemblies, none of the steel balls pierced, and the total weight of the pieces of the dropped glass was 0 to 1.5 g, the scattering amount of the glass was small, which was a good result as automobile safety glass.

### [Example 10]

A test piece of 200 mm in length and 30 mm in width was prepared from the same polycarbonate resin sheet (S1) as used in Example 1, and its one side was exposed to plasma at atmosphere pressure with an output of 1.5 kw, a frequency of 25 kHz, a nitrogen gas flow rate of 50 L/min and an exposure rate of 30 cm/min using a normal-pressure plasma surface treatment device (AP-T03-L, manufactured by SEKISUI CHEMICAL CO.,LTD.).

The treated surface of the polycarbonate resin sheet (S1_{P}) after exposed to plasma and the test piece of 200 mm in length and 30 mm in width cut out from the sheet (F1) prepared in Production Example 1 were laminated facing each other while a release film (PET 75 × 1-C, manufactured by Nippa Corporation) was inserted therebetween at an area of 50 mm from a longitudinal end part.

The laminate of the sheet (F1) and the resin sheet (S1_{P}) was used to produce an assembly (F1/S1_{P}) in the same manner as in Example 1.

AT-peel test piece was cut out from the obtained assembly (F1/S1_{P}), the peel strength at the interface between the sheet (F1) and the resin sheet (S1_{P}) was measured, as a result, the peel strength was 10 N/cm, and the adhesiveness was rated as "Good". Furthermore, after preserved under a hot and humid environment, the peel strength was 11 N/cm, and the moisture resistance was also rated as "Good".

### [Comparative Example 1]

An assembly (F1/S1) was prepared in the same manner as in Example 1 except that the polycarbonate resin sheet (S1) was used without corona discharge.

As a result of measuring the peel strength at the interface of the obtained assembly (F1/S1), the peel strength was 2 N/cm, and the adhesiveness was rated as "Bad". Furthermore, after preserved under a hot and humid environment, the peel strength was 1 N/cm or lower, and the moisture resistance was also rated as "Bad".

### [Comparative Example 2]

An assembly (F1/S2) was produced in the same manner as in Comparative Example 1 except that an acrylic resin sheet (S2) was used instead of the polycarbonate resin sheet.

As a result of measuring the peel strength at the interface of the obtained assembly (F1/S2), the peel strength was 1 N/cm, and the adhesiveness was rated as "Bad". Furthermore, after preserved under a hot and humid environment, the peel strength was 1 N/cm or lower, and the moisture resistance was also rated as "Bad".

### [Comparative Example 3]

An assembly (F1/S3) was produced in the same manner as in Comparative Example 1 except that a polyethylene terephthalate resin sheet (S3) was used instead of the polycarbonate resin sheet.

As a result of measuring the peel strength at the interface of the obtained assembly (F1/S3), the peel strength was 2 N/cm, and the adhesiveness was rated as "Bad". Furthermore, after preserved under a hot and humid environment, the peel strength was 1 N/cm or lower, and the moisture resistance was also rated as "Bad".

### [Comparative Example 4]

An assembly (F1/S4) was produced in the same manner as in Comparative Example 1 except that a hard vinyl chloride resin sheet (S4) was used instead of the polycarbonate resin sheet.

As a result of measuring the peel strength at the interface of the obtained assembly (F1/S4), the peel strength was 3 N/cm, and the adhesiveness was rated as "Bad". Furthermore, after preserved under a hot and humid environment, the peel strength was 1 N/cm or lower, and the moisture resistance was also rated as "Bad".

From the results of Examples and Comparative examples, the followings can be seen.

When the adherend surface of the polycarbonate resin sheet, the acrylic resin sheet, the polyethylene terephthalate resin sheet or the polyvinyl chloride resin sheet is subjected to corona discharge, this sheet may be thermally press-bonded with the sheet (F) made of the modified hydrogenated block copolymer (E) to obtain an assembly having sufficient adhesiveness (Examples 1, 3, 5, 7).

When carrying out not only corona discharge on the adherend surface of the polycarbonate resin sheet, the acrylic resin sheet, the polyethylene terephthalate resin sheet or the polyvinyl chloride resin sheet but also corona discharge on the adherend surface of the sheet (F) made of the modified hydrogenated block copolymer (E), an assembly having higher adhesiveness can be obtained by thermally press-bonding both of them (Examples 2, 4, 6, 8).

The laminated glass assembly obtained by laminating and bonding the glass sheet, the polycarbonate resin sheet having the adherend surface subjected to corona discharge and the sheet (F) made of the modified hydrogenated block copolymer (E) shows good properties also as an automobile safety glass (Example 9).

When the adherend surface of the polycarbonate resin sheet is exposed to plasma, an assembly having sufficient adhesiveness can be obtained by thermally press-bonding this sheet with the sheet (F) made of the modified hydrogenated block copolymer (E) (Example 10).

On the other hand, even if a sheet (F) made of a modified hydrogenated block copolymer (E) having an alkoxysilyl group introduced therein, and a not activated polycarbonate resin sheet, an acrylic resin sheet, a polyethylene terephthalate resin sheet or a polyvinyl chloride resin sheet are thermally press-bonded, an assembly having sufficient adhesiveness cannot be obtained (Comparative Examples 1 to 4).

### INDUSTRIAL APPLICABILITY

Aspects of the invention provide a method for producing an assembly having sufficiently high peel strength on an adherend surface obtained by bonding a sheet and made of a modified hydrogenated block copolymer having an alkoxysilyl group introduced therein with a thermoplastic resin sheet. The laminated glass assembly obtained by laminating and bonding the assembly according to one embodiment of the invention inserted between glass sheets is also useful as an automobile safety glass.

In addition, the sheet made of the modified hydrogenated block copolymer obtained by activation according to one embodiment of the invention is excellent in adhesiveness with a thermoplastic resin formed article, as well as in adhesiveness with a formed article made of a curable resin composition or a formed article made of a composite material composed of a curable resin with glass, paper, metal, carbon fiber.

Consequently, the sheet is useful as an adhesion sheet for firmly bonding a thermoplastic resin formed article, a formed article made of a curable resin composition, and a formed article made of a composite material composed of a curable resin with glass, paper, metal, carbon fiber.

## Claims

1. A method for producing an assembly by bonding a sheet made of a modified hydrogenated block copolymer with a thermoplastic resin sheet,
wherein the modified hydrogenated block copolymer is a hydrogenated block copolymer having an alkoxysilyl group introduced therein in an amount of 0.1 to 10 parts by weight based on 100 parts by weight of the hydrogenated block copolymer, the method comprising steps of:
(1) activating an adherend surface of the thermoplastic resin sheet with at least one selected from plasma exposure, excimer UV exposure and corona discharge; and
(2) superposing the sheet made of the modified hydrogenated block copolymer having the alkoxysilyl group introduced therein with the adherend surface of the thermoplastic resin sheet to be subjected to thermally press-bonding.

2. The method for producing the assembly according to claim 1, wherein
the step (1) is a step of activating both surfaces of the adherend surface of the sheet made of the modified hydrogenated block copolymer and the adherend surface of the thermoplastic resin sheet with at least one selected from plasma exposure, excimer UV exposure and corona discharge.

## Patentansprüche

1. Ein Verfahren zur Herstellung einer Anordnung mittels Verbinden einer aus einem modifizierten hydrierten Blockcopolymer hergestellten Folie mit einer thermoplastischen Harzfolie,
wobei das modifizierte hydrierte Blockcopolymer ein hydriertes Blockcopolymer mit einer darin eingeführten Alkoxysilylgruppe in einer Menge von 0,1 bis 10 Gewichtsteilen, bezogen auf 100 Gewichtsteile des hydrierten Blockcopolymers, ist, wobei das Verfahren die folgenden Schritte umfasst:
(1) Aktivieren einer Haftfläche der thermoplastischen Harzfolie mit mindestens einer Methode, ausgewählt aus Plasma-Exposition, Excimer-UV-Exposition und Corona-Entladung; und
(2) Übereinanderlegen der aus dem modifizierten hydrierten Blockcopolymer mit der darin eingeführten Alkoxysilylgruppe hergestellten Folie mit der Haftfläche der thermoplastischen Harzfolie, um einer thermischen Pressbindung unterzogen zu werden.

2. Das Verfahren zur Herstellung der Anordnung nach Anspruch 1, wobei
der Schritt (1) ein Schritt des Aktivierens beider Oberflächen der Haftfläche der aus dem modifizierten hydrierten Blockcopolymer hergestellten Folie und der Haftfläche der thermoplastischen Harzfolie mit mindestens einer Methode, ausgewählt aus Plasma-Exposition, Excimer-UV-Exposition und Corona-Entladung, ist.

## Revendications

1. Procédé pour produire un assemblage en liant une feuille formée d'un copolymère séquencé hydrogéné modifié avec une feuille de résine thermoplastique,
dans lequel le copolymère séquencé hydrogéné modifié est un copolymère séquencé hydrogéné ayant un groupe alcoxysilyle introduit dedans en une quantité de 0,1 à 10 parties en poids basée sur 100 parties en poids du copolymère séquencé hydrogéné, le procédé comportant les étapes consistant à :
(1) activer une surface adhérente de la feuille de résine thermoplastique avec au moins un choisi parmi une exposition au plasma, une exposition UV à excimère et une décharge en couronne, et
(2) superposer la feuille formée du copolymère séquencé hydrogéné modifié ayant le groupe alcoxysilyle introduit dedans, avec la surface de la partie adhérente de la feuille de résine thermoplastique devant être soumise au collage sous presse thermique.

2. Procédé pour produire l'assemblage selon la revendication 1, dans lequel
l'étape (1) est une étape d'activation des deux surfaces de la surface adhérente de la feuille formée du copolymère séquencé hydrogéné modifié et de la surface adhérente de la feuille de résine thermoplastique, avec au moins un choisi parmi une exposition au plasma, une exposition UV à excimère et une décharge en couronne.
